# FASCICULE DE BREVET EUROPEEN

(11) **EP 1 492 823 B1**
(45) Date de publication et mention de la délivrance du brevet: **27.02.2008**
(21) Numéro de dépôt: 02732802.0
(22) Date de dépôt: 11.04.2002
(51) Int. Cl.: C08C 19/02, C08F 8/04

(54) **PROCEDE D'HYDROGENATION DE POLYMERES EN MILIEU DISPERSE**
VERFAHREN ZUR HYDRIERUNG VON POLYMEREN IN DISPERGIERTEM MEDIUM
METHOD FOR HYDROGENATION OF POLYMERS IN DISPERSED MEDIUM

(43) Date de publication de la demande: 05.01.2005
(73) Titulaire: ARKEMA FRANCE, 92700 Colombes (FR)
(72) Inventeur: PRADEL, Jean-Laurent, F-27300 Bernay (FR); NOGUES, Pierre, F-27300 Bernay (FR); LORET, Christophe, F-77300 Fontainbleau (FR)
(74) Mandataire: Mouttet, Marie-Paule
(86) Numéro de dépôt international: PCT/FR2002/001261
(87) Numéro de publication internationale: WO 2003/093326

(56) Documents cités:
- EP-A- 0 588 099
- WO-A-00/09576
- US-A- 5 057 601
- US-A- 5 302 696

## Description

L'invention se rapporte à l'hydrogénation des polymères insaturés, et particulièrement à l'hydrogénation des polymères insaturés en milieu dispersé, à l'aide d'un système oxydo-réducteur à base d'hydrazine ou un de ses dérivés, d'un oxydant et un acide carboxylique.

Il est bien connu que la structure chimique d'un polymère conditionne ses propriétés physico-chimiques. Par exemple les polymères renfermant une ou plusieurs doubles liaisons éthylénique, ci-après désignés par polymères insaturés, sont souples et élastiques. Pour cette raison ils connaissent des applications multiples.

Cependant leurs applications sont limités, car les doubles liaisons éthyléniques sont sensibles à l'oxydation, ce qui rend les polymères insaturés fragiles en vieillissement thermique et/ou UV.

En réduisant le taux d'insaturation des polymères insaturés, on réduit leur sensibilité à l'oxydation. La réduction du taux d'insaturation se fait généralement par hydrogénation.

Pour certaines applications, on a besoin de trouver un compromis entre l'élasticité d'un polymère et sa sensibilité à l'oxydation. D'ou l'intérêt d'une technique d'hydrogénation controlée.

La méthode d'hydrogénation et les réactions mises en oeuvre sont bien connues et largement décrites. A titre indicatif on peut en citer

WO 00/009576 décrit l'utilisation d'un système contenant de l'hydrazine, un oxydant et un catalyseur contenant un élément du groupe 13 de la classification périodique, pour l'hydrogénation de polymères insaturés tels que les élastomères à base de nitrile et de butadiène désignés par NBR.

US 5302696 décrit un procédé d'hydrogénation de latex par l'utilisation d'hydrazine, d'un oxydant et d'un sel de fer ou de cuivre. Application au latex NBR.

WO 9106579 décrit une préparation de caoutchouc coagulé contenant peu d'insaturation à partir d'un latex de NBR hydrogéné en présence d'hydrazine et d'un oxydant.

US 5902889 décrit un procédé d'hydrogénation d'acides gras insaturés en solution aqueuse sous forme de sels par l'hydrazine en présence d'un oxydant et d'un sel métallique.

US 5442009 décrit un procédé de préparation d'un caoutchouc "sec" hydrogéné par l'hydrogénation d'un latex en présence d'un oxydant, d'hydrazine et d'un sel métallique. Application aux latex de NBR.

US 5424356 décrit la préparation de caoutchouc hydrogéné par le traitement d'un latex (NBR) par un oxydant en présence d'hydrazine et d'un sel métallique.

WO 9217512 décrit l'hydrogénation de latex insaturés en présence d'un oxydant, d'hydrazine et d'un sel métallique. Les latex cités sont des copolymères (I) butadiène, (II) acrylonitrile, isoprène ou butadiène et/ou (III) styrène.

US 4452950 décrit l'hydrogénation des doubles liaisons d'un polymère insaturé sous forme de latex en présence d'hydrazine, d'un oxydant et d'un sel métallique.

Comme on peut le constater tous ces documents décrivent un procédé d'hydrogénation basé sur la présence de sel métallique.

La demanderesse a cherché et mis au point un procédé d'hydrogénation facile à mettre en oeuvre, peu coûtant et ne nécessitant pas l'emploi de sel métallique.

Le procédé d'hydrogénation de polymères insaturés selon l'invention et qui en constitue le premier objet, est basé sur un système oxydo-réducteur mettant en oeuvre l'hydrazine, un oxydant et un acide carboxylique.

Pour appliquer le procédé de l'invention, il est nécessaire que le polymère insaturé soit mis en dispersion en milieu aqueux. Il est donc facilement applicable aux latex stables de polymères insaturés. Mais il ne se limite pas aux tels latex. Il s'applique également à tous les polymères insaturés qu'ils soient liquides ou solides, purs ou en solution, à condition qu'ils soient dispersables dans l'eau sous agitation mécanique.

Pour réaliser le procédé de l'invention on procède de la manière suivante : le polymère insaturé est mis en dispersion dans l'eau par simple agitation mécanique, on ajoute ensuite tout ou partie de l'hydrazine, éventuellement un acide carboxylique, on chauffe le milieu réactionnel à la température désirée, puis on introduit en coulée co-continue éventuellement le reste de l'hydrazine et l'oxydant.

Si le polymère insaturé est sous la forme d'un latex, les différents additifs sont rajoutés directement dans ce latex. Si le polymère insaturé est liquide ou sous la forme d'une poudre, il est dispersé dans l'eau par simple agitation mécanique. En revanche si le polymère à hydrogéner est solide, il est dans un premier temps dissous dans le minimum de solvant organique et mis ensuite en dispersion.
Si le polymère insaturé est soluble dans l'eau, l'hydrogénation est réalisée directement dans la solution aqueuse.

Comme polymères insaturés hydrogénables selon l'invention on peut citer :
- les oligomères, fonctionnels ou non, de diènes tels que les oligomères du butabiène, d'isoprène, de 2,3-diméthyl butadiène, de chloroprène ainsi que leur copolymères entre eux ou avec un ou plusieurs autres monomères vinyliques tels que le styrène ou ses dérivés substitués, l'acrylonitrile, les alkyles d'acrylates ou de méthacylates, les vinyls éthers, les vinyls esters, les alcènes halogénés (VF2, CVM,...) et les allyls éthers.
   Ces oligomères peuvent être obtenu par n'importe quel procédé de polymérisation connu : radicalaire, anionique, Zieggler-Natta, métathèse, etc.
   Ces oligomères peuvent être fonctionnalisés en fin de chaîne ou sur la chaîne, comme par exemple les polybutadiène hydroxy téléchéliques, animo téléchéliques ou carboxy téléchéliques, les polybutadiènes maléisés, les copolymères de butadiène et d'acrylonitrile carboxy téléchéliques, les copolymères de butadiène et de styrène, etc...
- Les polymères solides insaturés dispersés dans l'eau, sous forme de latex fonctionnels ou non, et les dispersions de poudre contenant des diènes tels que le butabiène, l'isoprène, le 2,3-diméthyl butadiène, le chloroprène ainsi que leur copolymères entre eux ou avec un ou plusieurs autres monomères vinyliques tels que le styrène ou ses dérivés substitués, l'acrylonitrile, les alkyles d'acrylates ou méthacylates, les vinyls éthers, les vinyls esters, les alcènes halogénés (VF2, CVM, ... ) et les allyls éthers.
- Les polymères insaturés solides dissous dans un solvant organique, laquelle solution est dispersible dans l'eau, contenant des diènes tels que le butabiène, l'isoprène, le 2,3-diméthyl butadiène, le chloroprène ainsi que leur copolymères entre eux ou avec un ou plusieurs autres monomères vinyliques tels que le styrène ou ses dérivés substitués, l'acrylonitrile, les alkyles d'acrylates ou méthacylates, les vinyls éthers, les vinyls esters, les alcènes halogénés (VF2, CVM,...) et les allyls éthers.
   Ces polymères peuvent être obtenu par n'importe quel procédé de polymérisation connu : radicalaire, anionique, Zieggler-Natta, métathèse.
   Le solvant permettant leur dispersion dans l'eau peut être un aliphatique, un aromatique, un éther cyclique ou non, un alcool, etc... A titre d'exemple on citera l'hexane, l'heptane, le benzène, le toluène, l'éthyl benzène, l'éthyl éther, le butyl éther, le tétrahydrofurane, le méthanol, l'éthanol, l'isopropanol, etc...
- les polymères solides ou en solvant contenant des insaturations, non issues de monomères dièniques, par exemple les polymères qui contiennent des défauts de chaîne insaturés suite à leur procédé de préparation. A titre indicatif, on citera le PVC, le PMMA, etc quelque soit leur procédé de synthèse (masse, suspension ou émulsion).

Le réducteur est l'hydrazine ou un de ces dérivés comme par exemple l'hydrate d'hydrazine, les mono et di hydro halogénures d'hydrazine, les carboxylates d'hydrazines.

L'oxydant peut être l'oxygène ou un peroxyde R-OO-R' où R et R' peuvent être l'hydrogène ou des résidus alkyles saturés linéraires, cycliques ou branchés. A titre d'exemple on citera le peroxyde d'hydrogène, le butylhydroperoxyde, le dicumylperoxyde, etc...

L'acide carboxylique, utilisé comme catalyseur, est choisi parmi la famille des acides carboxyliques aliphatiques ou aromatiques, comme par exemple l'acide formique, l'acide acétique, l'acide benzoïque, l'acide stéarique, etc... ou leurs sels d'alkaloïde.

Ce procédé passe par la formation in situ de l'espèce réactive, la diimide, qui est un agent d'hydrogénation sélectif des doubles liaisons C-C par cis-addition d'une paire de proton et dégagement d'azote.

L'hydrogénation se déroule dans un réacteur quelconque équipé d'un système de régulation de température, d'une agitation efficace, de pompes d'alimentation, d'un évent pour éliminer les dégagements gazeux et éventuellement d'un condenseur.
On définit une agitation comme efficace lorsque qu'elle permet un échange correct des espèces réactives entre la phase aqueuse et la phase organique. En fonction de la viscosité des produits et de leur comportement en dispersion dans l'eau, on pourra choisir entre une ancre, un impeler, une turbine ou un mobile hélicoïdal, ou une combinaison de ces éléments. Le réacteur peut également être équipé d'une contre-pale.

Le polymère à hydrogéner est introduit dans le dit réacteur en présence ou non de solvant, et d'eau (additionnelle dans le cas d'un polymère sous forme de latex ou de dispersion) ou non. Une partie du réducteur nécessaire à l'hydrogénation est introduite dans le réacteur avec l'acide carboxylique. Le reste du réducteur sera coulé en continu durant la réaction avec une pompe appropriée, ainsi que la totalité de l'oxydant au moyen d'une seconde pompe. La réaction d'hydrogénation est conduite entre 0 et 100°C, et de préférence entre 50 et 100°C, sous pression atmosphérique ou sous vide contrôlé. L'intérêt de conduire la réaction sous vide contrôlé est d'utiliser un condenseur pour augmenter la capacité d'échange thermique du réacteur.

Le contrôle du déroulement de la réaction peut se faire par le suivi de la quantité de chaleur dégagée ou par la quantité d'azote formé durant la réaction.

La quantité de réducteur nécessaire à l'hydrogénation est définie par rapport à la quantité d'insaturations à hydrogéner. On choisira de se placer à un excès stoechiométrique en réducteur, préférenciellement entre 1 et 2, et plus particulièrement entre 1,2 et 2. La quantité de réducteur introduite dans le réacteur en début de réaction est comprise entre 0 et 100 % de quantité totale, et de préférence entre 10 et 70 %. Le reste du réducteur est coulé en cours de réaction sur une durée comprise entre 0,1 heure et 5 heures, et de préférence entre 0,5 heure et 2 heures.

La quantité d'acide carboxylique, utilisé en tant que catalyseur, est choisie entre 0 et 20 % molaire par rapport à la quantité molaire de réducteur, de préférence entre 0 et 10 % et en particulier en dessous de 5 %. La totalité du catalyseur peut être mélangée au réducteur avant ou pendant son introduction dans le réacteur. La quantité d'acide carboxylique peut être nulle, sans sortir du cadre de l'invention, si le polymère est lui-même porteur de fonctions acide carboxylique ou carboxylate.

La quantité d'oxydant nécessaire à l'hydrogénation est définie par rapport à la quantité de réducteur. On se placera en excès stoechiométrique préférenciellement dans un rapport molaire compris entre 1 et 2, et plus particulièrement entre 1 et 1,5. Cet excès stoechiométrique permet d'assurer la consommation totale du réducteur en fin de réaction. L'oxydant est ajouté en continu tout au long de la réaction de manière à maitriser la température de réaction, le débit d'oxydant doit permettre de maintenir la température de réaction choisie constante. La durée globale de réaction est donc fonction de la capacité d'échange thermique du réacteur.

En fin de réaction, on peut procéder à une post cuisson, à la température de réaction, durant 0 et 90 minutes, et plus particulièrement entre 15 et 60 min.

En fonction du polymère hydrogéné obtenu et de l'état dans lequel on souhaite le récupérer, en fin de réaction, le mélange réactionnel peut être simplement refroidi si l'on souhaite récupérer de polymère hydrogéné sous forme de dispersion, additivé d'un non solvant du polymère hydrogéné pour déclencher sa précipitation, ou coulé dans un second réacteur contenant un non solvant si l'on souhaite récupérer de polymère hydrogéné sous forme de poudre. Dans ce cas le polymère hydrogéné est récupéré après lavage, filtration et séchage dans des conditions adaptées à sa structure et à la nature du non solvant.

Par rapport au procédé d'hydrogénation classique en présence d'un métal de transition et d'hydrogène, ce procédé présente les avantages suivants :
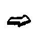 Hydrogénation en milieu dispersé réduisant l'utilisation de solvant organique.
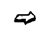 Hydrogénation sous pression atmosphérique ou réduite simplifiant les structures industrielles.
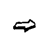 Traitement final du produit par précipitation, filtration, lavage et essorage limitant la complexité de la partie aval de l'unité industrielle.
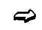 Sous produits non polluant tels que l'eau et l'azote.
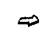 Hydrogénation sélective des doubles liaisons C-C permettant l'hydrogénation de polymères de structures complexes.

Les exemples suivants illustrent l'invention sans en limiter la portée.

### EXEMPLES

### 1. Hydrogénation de polybutadiène hydroxylé

### 1.1. Exemple conforme à l'invention

On réalise l'hydrogénation de polybutadiène hydroxylé (HTPB), de marque Poly Bd R-45HT commercialisé par la société ATOFINA, dans un réacteur en verre double enveloppe muni d'une agitation de type turbine ou d'une agitation mixte ancre et impeler, d'une contre pale, d'un réfrigérant et de 2 pompes permettant de contrôler les débits en réducteur et en oxydant.
On introduit dans le réacteur 100 g de HTPB de masse moléculaire moyenne de 2900, 50 g d'eau déminéralisée, 74 g d'hydrate d'hydrazine à 64 % massique dans l'eau et l'équivalent de 9 g d'acide acétique pur. On charge dans les ampoules d'alimentation des pompes d'une part 74 g d'hydrate d'hydrazine à 64 % massique dans l'eau, et d'autre part 282 g d'eau oxygénée à 50 % dans l'eau.

Le mélange réactionnel est chauffé sous agitation à 300 tr/min jusqu'à 65°C. On débute alors la coulée simultanée de l'hydrate d'hydrazine à un débit de 74 g/h et de l'eau oxygénée à un débit de 47 g/h. La consigne de température est fixée à 75°C et régulée par la température de double enveloppe.
A la fin de la coulée de l'eau oxygénée, au bout de 6 heures, le milieu réactionnel est porté à 80°C pendant 45 minutes. On refroidit alors le milieu à température ambiante en ajoutant 500 ml d'eau déminéralisée et en baissant la température de consigne.
Le HTPB hydrogéné forme alors une poudre blanche en dispersion dans l'eau, qui est filtrée, lavée à l'eau, essorée, puis séchée en lit fluidisé.
L'analyse par RMN du proton dans le chloroforme deutéré permet de doser un taux d'hydrogénation de 99 %. L'analyse RMN confirme également la conservation des fonctions alcools sur le produit hydrogéné.

### 1.2. Contre exemple 1

La même réaction réalisée en l'absence d'acide acétique, mais en présence 0.1 g de sulfate de cuivre conduit à un HTPB hydrogéné coloré en jaune-orangé qui présente un taux d'hydrogénation déterminé par RMN du proton à 30 %.

### 1.3. Contre exemple 2

La même réaction réalisée en l'absence d'acide acétique et de sulfate de cuivre conduit à un HTPB hydrogéné qui présente un taux d'hydrogénation déterminé par RMN du proton à 25 %.

### 2. Hydrogénation d'une dispersion aqueuse de polyuréthane à base de polybutadiène hydroxy téléchélique.

On prépare une dispersion aqueuse de polyuréthane à base de polybutadiene hydroxy téléchélique comme décrit dans le brevet FR 98.03793 de la société ATOFINA. La dispersion ainsi préparée a un extrait sec de 30 %, une taille de particules de 100 nm et contient 22 % de polybutadiène en poids.
250 ml de cette dispersion sont introduits dans le même réacteur que dans l'exemple 1, muni d'une agitation ancre/impeler, avec 40,5 g d'hydrate d'hydrazine à 64 % dans l'eau. La dispersion contenant des groupements carboxylates pour la stabilisation, on ne charge pas d'acide acétique. On charge dans les ampoules d'alimentation des pompes d'une part 40,5 g d'hydrate d'hydrazine à 64 % massique dans l'eau, et d'autre part 155 g d'eau oxygénée à 50 % dans l'eau.
Le mélange réactionnel est chauffé sous agitation à 200 tr/min jusqu'à 65°C. On débute alors la coulée simultanée de l'hydrate d'hydrazine à un débit de 40 g/h et de l'eau oxygénée à un débit de 38,75 g/h. La consigne de température est fixée à 75°C et régulée par la température de double enveloppe.
A la fin de la coulée de l'eau oxygénée, au bout de 4 heures, le milieu réactionnel est porté à 80°C pendant 45 minutes. On refroidit alors le milieu à température en baissant la température de consigne.
On obtient une dispersion stable de polyuréthane à base de polybutadiène hydroxy téléchélique hydrogénée d'extrait sec 17,5 % et de taille de particules 100 nm. La structure hydrogénée du produit est confirmé sur un film obtenu par séchage de la dispersion par analyse Infra Rouge et par RMN du solide, comme étant supérieure à 99 %.

### 3. Hydrogénation d'un copolymère à bloc Styrène-Butadiène-Méthacrylate de méthyle

On prépare selon EP 524054 ou EP 749987 de la société ATOFINA un terpolymère à blocs contenant 38 % en masse de styrène, 38 % en masse de butadiène et 24 % en masse de méthacrylate de méthyle.
On introduit 60 g de ce terpolymère, 300 g d'éthyl benzène et 30 g d'eau déminéralisée dans le même réacteur que dans l'exemple 1, muni d'une turbine, avec 17 g d'hydrate d'hydrazine à 64 % dans l'eau et l'équivalent de 2 g d'acide acétique pur. On charge dans les ampoules d'alimentation des pompes d'une part 17 g d'hydrate d'hydrazine à 64 % massique dans l'eau, et d'autre part 64 g d'eau oxygénée à 50 % dans l'eau.
Le mélange réactionnel est chauffé sous agitation à 250 tr/min jusqu'à 65°C. On débute alors la coulée simultanée de l'hydrate d'hydrazine à un débit de 17 g/h et de l'eau oxygénée à un débit de 16 g/h. La consigne de température est fixée à 75°C et régulée par la température de double enveloppe.

A la fin de la coulée de l'eau oxygénée, au bout de 4 heures, le milieu réactionnel est porté à 80°C pendant 45 minutes. On refroidit alors le milieu à température en baissant la température de consigne et en introduisant 400 ml d'éthanol technique.
Le terpolymère hydrogéné forme alors une poudre blanche en dispersion, qui est filtrée, lavée à l'éthanol, essorée, puis séchée sous vide.
L'analyse par RMN du proton dans le chloroforme deutéré permet de doser un taux d'hydrogénation de 99,6 % du bloc polybutadiène. L'analyse RMN confirme également la conservation des blocs styrène et méthacrylate de méthyle.

### 4. Hydrogénation d'un copolymère à bloc Styrène-Butadiène-Styrène

On introduit 60 g de Finaprène 602, 300 g d'éthyl benzène et 30 g d'eau déminéralisée dans le même réacteur que dans l'exemple 1, muni d'une turbine, avec 27 g d'hydrate d'hydrazine à 64 % dans l'eau et l'équivalent de 3 g d'acide acétique pur. On charge dans les ampoules d'alimentation des pompes d'une part 26 g d'hydrate d'hydrazine à 64 % massique dans l'eau, et d'autre part 101 g d'eau oxygénée à 50 % dans l'eau.
Le mélange réactionnel est chauffé sous agitation à 250 tr/min jusqu'à 65°C. On débute alors la coulée simultanée de l'hydrate d'hydrazine à un débit de 26 g/h et de l'eau oxygénée à un débit de 25 g/h. La consigne de température est fixée à 75°C et régulée par la température de double enveloppe.
A la fin de la coulée de l'eau oxygénée, au bout de 4 heures, le milieu réactionnel est porté à 80°C pendant 45 minutes. On refroidit alors le milieu à température en baissant la température de consigne.
Le Finaprène 602 hydrogéné est précipité par coulée dans 1 litre d'éthanol technique sous forme de filaments, qui sont essorée, puis séchée sous vide.
L'analyse par RMN du proton dans le chloroforme deutéré permet de doser un taux d'hydrogénation de 95 % du bloc polybutadiène. L'analyse RMN confirme également la conservation des blocs styrène.

## Revendications

1. Procédé d'hydrogénation de polymères insaturés renfermant des doubles liaisons éthylèniques par l'utilisation d'un réducteur, d'un oxydant et d'un acide carboxylique.

2. Procédé selon la revendication 1, **caractérisé en ce que** l'hydrogénation est conduite en dispersion aqueuse stable telle qu'un latex ou non stable telle qu'une dispersion mécanique.

3. Procédé selon la revendication 1 ou 2, **caractérisé en ce que** :
- Le rapport molaire réducteur/insaturations à hydrogéner est compris entre 1 et 2 et de préférence entre 1, 5 et 2 ;
- le rapport molaire oxydant / réducteur est compris entre 1 et 2 et de préférence entre 1 et 1,5 ;
- la quantité d'acide est comprise entre 0 et 20 % molaire par rapport au réducteur.

4. Procédé selon l'une des revendications précédentes, **caractérisé en ce que** la réaction est conduite à une température comprise entre 0 et 100°c et de préférence entre 50 et 100°c.

5. Procédé selon l'une des revendications précédentes, **caractérisé en ce que** le réducteur est choisi parmi l'hydrazine ou un de ses dérivés.

6. Procédé selon la revendication 5, **caractérisé en ce que** les dérivés sont choisis parmi l'hydrate d'hydrazine, les mono et di hydro halogénures d'hydrazine, les carboxylates d'hydrazines.

7. Procédé selon l'une des revendications précédentes, **caractérisé en ce que** l'oxydant est choisi parmi l'oxygène ou un peroxyde R-OO-R' où R et R' peuvent être l'hydrogène ou des résidus alkyles saturés linéaires, cycliques ou branchés.

8. Procédé selon la revendication 7, **caractérisé en ce que** le péroxyde R-OO-R' est choisi parmi l'eau oxygénée, le butylhydroperoxyde ou le dicumylperoxyde.

9. Procédé selon l'une des revendications précédentes, **caractérisé en ce que** l'acide carboxylique est choisi parmi les acides carboxyliques aliphatiques ou aromatiques, tel que l'acide formique, l'acide acétique, l'acide benzoïque, l'acide stéarique ou leurs sels d'alkaloïde.

10. Procédé selon la revendication 9, **caractérisé en ce que** l'acide carboxylique est l'acide acétique.

## Claims

1. Process for hydrogenating unsaturated polymers that contain ethylenic double bonds via the use of a reducing agent, an oxidizing agent and a carboxylic acid.

2. Process according to Claim 1, **characterized in that** the hydrogenation is carried out in a stable aqueous dispersion such as a latex or a non-stable aqueous dispersion such as a mechanical dispersion.

3. Process according to Claim 1 or 2, **characterized in that**:
- the reducing agent/unsaturations to be hydrogenated molar ratio is between 1 and 2, and preferably between 1.5 and 2;
- the oxidizing agent/reducing agent molar ratio is between 1 and 2, and preferably between 1 and 1.5; and
- the amount of acid is between 0 and 20 mol% relative to the reducing agent.

4. Process according to one of the preceding claims, **characterized in that** the reaction is carried out at a temperature between 0 and 100°C, and preferably between 50 and 100°C.

5. Process according to one of the preceding claims, **characterized in that** the reducing agent is chosen from hydrazine or one of its derivatives.

6. Process according to Claim 5, **characterized in that** the derivatives are chosen from hydrazine hydrate, hydrazine monohydrohalides and dihydrohalides, and hydrazine carboxylates.

7. Process according to one of the preceding claims,
**characterized in that** the oxidizing agent is chosen from oxygen or a peroxide R-OO-R' where R and R' may be hydrogen or linear, cyclic or branched saturated alkyl residues.

8. Process according to Claim 7, **characterized in that** the peroxide R-OO-R' is chosen from hydrogen peroxide, butyl hydroperoxide or dicumyl peroxide.

9. Process according to one of the preceding claims, **characterized in that** the carboxylic acid is chosen from aliphatic or aromatic carboxylic acids, such as formic acid, acetic acid, benzoic acid, stearic acid or alkaloid salts thereof.

10. Process according to Claim 9, **characterized in that** the carboxylic acid is acetic acid.

## Patentansprüche

1. Verfahren zur Hydrierung von ungesättigten Polymeren mit ethylenischen Doppelbindungen durch Verwendung eines Reduktionsmittels, eines Oxidationsmittels und einer Carbonsäure.

2. Verfahren nach Anspruch 1, **dadurch gekennzeichnet, daß** man die Hydrierung in einer stabilen wäßrigen Dispersion wie einem Latex oder einer instabilen wäßrigen Dispersion wie einer mechanischen Dispersion durchführt.

3. Verfahren nach Anspruch 1 oder 2, **dadurch gekennzeichnet, daß**:
- das Molverhältnis Reduktionsmittel/zu hydrierende Ungesättigtheiten zwischen 1 und 2 und vorzugsweise zwischen 1,5 und 2 liegt;
- das Molverhältnis Oxidationsmittel/Reduktionsmittel zwischen 1 und 2 und vorzugsweise zwischen 1 und 1,5 liegt;
- die Säuremenge zwischen 0 und 20 Mol-%, bezogen auf das Reduktionsmittel, liegt.

4. Verfahren nach einem der vorhergehenden Ansprüche, **dadurch gekennzeichnet, daß** man die Reaktion bei einer Temperatur zwischen 0 und 100°C und vorzugsweise zwischen 50 und 100°C durchführt.

5. Verfahren nach einem der vorhergehenden Ansprüche, **dadurch gekennzeichnet, daß** man das Reduktionsmittel unter Hydrazin oder einem Derivat davon auswählt.

6. Verfahren nach Anspruch 5, **dadurch gekennzeichnet, daß** man die Derivate unter Hydrazinhydrat, Hydrazinmono- und Hydrazindihydrohalogeniden oder Hydrazincarboxylaten auswählt.

7. Verfahren nach einem der vorhergehenden Ansprüche, **dadurch gekennzeichnet, daß** man das Oxidationsmittel unter Sauerstoff oder einem Peroxid R-OO-R', worin R und R' für Wasserstoff oder lineare, cyclische oder verzweigte gesättigte Alkylreste stehen können, auswählt.

8. Verfahren nach Anspruch 7, **dadurch gekennzeichnet, daß** man das Peroxid R-OO-R' unter Wasserstoffperoxid, Butylhydroperoxid oder Dicumylperoxid auswählt.

9. Verfahren nach einem der vorhergehenden Ansprüche, **dadurch gekennzeichnet, daß** man die Carbonsäure unter aliphatischen oder aromatischen Carbonsäuren, wie Ameisensäure, Essigsäure, Benzoesäure, Stearinsäure oder Alkaloidsalzen davon auswählt.

10. Verfahren nach Anspruch 9, **dadurch gekennzeichnet, daß** es sich bei der Carbonsäure um Essigsäure handelt.
